# EUROPÄISCHE PATENTANMELDUNG

(11) **EP 2 199 583 A2**
(43) Veröffentlichungstag der Anmeldung: **23.06.2010**
(21) Anmeldenummer: 09173758.5
(22) Anmeldetag: 22.10.2009
(51) Int. Cl.: F02F 7/00, F16C 5/00

(54) **Kreuzkopf-Grossdieselmotor**

(30) Priorität: 18.12.2008 EP 08172138
(71) Anmelder: Wärtsilä Schweiz AG, 8401 Winterthur (CH)
(72) Erfinder: Kiser, Silvan, 8400, Winterthur (CH)
(74) Vertreter: Irsch, Manfred

(57) **Zusammenfassung**

Die Erfindung betrifft einen Kreuzkopf-Grossdieselmotor (1) mit einer Grundplatte (2) zur Aufnahme einer sich entlang einer Motorachse (31) erstreckenden Kurbelwelle (3), einem zwei Aussenwände (4) umfassenden Ständer (5), welcher auf der Grundplatte (2) angeordnet ist, sowie eine auf dem Ständer (5) angeordnete Zylindersektion (6) zur Aufnahme eines Zylinders. Die Grundplatte (2), der Ständer (5) und die Zylindersektion (6) sind durch einen Zuganker (7) miteinander verbunden, der sich im Ständer (5) entlang einer Gleitfläche (8) zur Abstützung eines Gleitschuhes (9) eines Kreuzkopfes (10) erstreckt. Erfindungsgemäss ist der Zuganker (7) im Bereich des Ständers (5) als Stützanker (7) ausgebildet, an dem der Gleitschuh (9) über die Gleitfläche (8) abgestützt ist.

## Beschreibung

Die Erfindung betrifft einen Kreuzkopf-Grossdieselmotor gemäss dem Oberbegriff des unabhängigen Anspruchs 1.

Ein Grossdieselmotor der Kreuzkopfbauart, wie er bevorzugt im Schiffsbau oder in stationären Anlagen, beispielsweise zur Erzeugung elektrischer Energie zum Einsatz kommt, umfasst drei grosse Gehäusesegmente, die den Rahmen des Motors bilden. Auf einer Grundplatte, die neben einem Lagersattel mit Kurbelwellenhauptlager zur Aufnahme der Kurbelwelle transversale Stützelemente aufweist, ist, getrennt durch eine Bodenplatte, ein sogenannter Ständer angeordnet. Der Ständer umfasst entsprechend der Anzahl der Zylinder des Grossdieselmotors mehrere Stützkörper, die jeweils zwei senkrecht verlaufende Gleitflächen zur Führung zweier benachbarter Kreuzköpfe, die über Schubstangen mit der Kurbelwelle verbunden sind, aufweisen. Dabei werden jeweils zwei gegenüberliegende senkrecht verlaufende Gleitflächen durch eine Mittelwand zusätzlich abgestützt.

Die einzelnen Stützkörper sind in der Regel durch ein gemeinsames Deckblech miteinander verbunden. Oberhalb des Ständers ist dann am Deckblech eine Zylindersektion, häufig auch Zylindermantel genannt, angeordnet die zur Aufnahme mehrerer Zylinderliner geeignet ist. Die Grundplatte, der Ständer und die Zylindersektion werden dabei durch Zuganker, die sich im Bereich des Ständers in aller Regel innerhalb der Stützkörper erstrecken, miteinander verbunden, indem die Zuganker in oder an der Grundplatte unter erheblicher Vorspannung verschraubt werden.

Aus der DE 3 512 347 C1 ist ein Ständer mit einer Abstützung für Kreuzkopfgleitbahnen von Kolbenmaschinen bekannt, bei dem die Abstützung doppelwandig ausgestaltet ist. Der Ständer, auf welchem ein Zylindermantel zur Aufnahme von Zylinderlinern platziert ist, ist auf Bodenblechen auf einer Grundplatte angeordnet, wobei die Bodenbleche zusammen mit schräg verlaufenden Aussenwänden und senkrechten Gleitflächen zwei im Querschnitt trapezförmige Rahmen bilden, die durch ein gemeinsames Deckblech miteinander verbunden sind. Zwischen den Aussenwänden und den Gleitflächen sind die trapezförmigen Rahmen durch transversale Stützwände ausgefüllt, so dass sich als Abstützung ein doppelwandig ausgestalteter Stützkörper ergibt. Die Grundplatte umfasst einen Lagersattel mit einer unteren und einer oberen Lagerschale mit Lagerdeckel, in welcher Lagerschale die Kurbelwelle im Lagersattel der Grundplatte gelagert ist. Zylindermantel, Ständer und Grundplatte des Motors werden von Zugankern zusammengehalten, die unter Vorspannung unterhalb der Kurbelwelle am oder im Lagersattel fixiert sind.

Ein verwandtes Konzept wird in der EP 0 774 061 B1 verfolgt. Hier wird mit einem Stützkörper gearbeitet, in welchem die Zuganker geführt sind und der anstatt eines rechteckigen Querschnitts einen dreiecksförmigen Querschnitt aufweist und somit ebenfalls als doppelwandig zu bezeichnen ist.

Bei solchen bekannten Kreuzkopf-Grossdieselmotoren sind die doppelwandig ausgestalteten Stützkörper des Ständers auf ebenfalls doppelwandig ausgestalteten Stützelementen in der Grundplatte abgestützt. Das heisst, sowohl der Ständer als auch die Grundplatte sind durch transversale Stützwände doppelwandig ausgestaltet.

Der aus diesem Stand der Technik bekannte Aufbau eines Kreuzkopf-Grossdieselmotors hat dabei einige gravierende Nachteile. Die Stützelemente werden in der Grundplatte durch Schweissnähte fixiert. Wenn die Stützelemente und die Stützkörper durch zwei gegenüber angeordnete Wände doppelwandig ausgestaltet sind, können die Schweissnähte zwischen zwei Wänden, die ein doppelwandiges, also in Querschnittsrichtung geschlossenes Stützelement bzw. einen geschlossenen Stützkörper bilden, nicht gegengeschweisst werden, so dass sich die entsprechenden Probleme zur Erreichung der notwendigen Qualität ergeben.

Darüber hinaus sind die Zuganker am unteren Ende des Sattels, also unterhalb der Kurbelwelle fixiert, so dass die Zuganker durch Bohrungen im Lagersattel, durch sogenannte Zugankerpfeifen, bis in einen unteren Bereich des Lagersattels geführt werden müssen. Da die Zuganker unter erheblicher Vorspannung unterhalb des Lagersattels fixiert werden müssen, führt das zu erheblichen Verspannungen im Lagersattel und zu Deformationen der Lagerschale. Damit ist die bekannte Grundplatte relativ steif und rein konstruktiv relativ aufwendig.

Zur Vermeidung vorgenannter Probleme mit dem Ständer wurde in der EP 1 382 829 daher ein Kreuzkopf-Grossdieselmotor vorgeschlagen, der eine einwandig ausgestaltete Grundplatte und einen doppelwandigen Ständer aufweist. Dabei sind die Grundplatte, der Ständer und die Zylindersektion durch Zuganker miteinander verbunden, wobei sich der Zuganker im Bereich des Ständers innerhalb des doppelwandigen Stützkörpers erstreckt und in einem Lagersattel der Grundplatte fixiert ist.

Was die Stabilität und den Aufbau des Ständers insgesamt und vor allem das Zusammenwirken der Grundplatte mit dem übrigen Ständeraufbau betrifft, hat die Lösung gemäss EP 1 382 829 zwar im Vergleich mit dem seinerzeit bekannten Stand der Technik zu enormen Verbesserungen geführt. Jedoch sind auch bei dem aus der EP 1 382 829 bekannten Ständer die Zuganker oberhalb der Grundplatte innerhalb eines geschlossenen Stützkörpers geführt. Derartige Stützkörper garantieren zwar die notwendige Stabilität des Ständers, sind aber schwierig zu schweissen und insbesondere können die Schweissnähte im Inneren des Stützkörpers nicht gegengeschweisst werden. Ein weiterer damit zusammenhängender Nachteil ist, dass nach dem Zusammenschweissen des Stützkörpers die Schweissnähte innerhalb des Stützkörpers nicht direkt in Augenschein genommen und inspiziert werden können. Zur Qualitätssicherung werden die Schweissnähte daher mit aufwendigen technischen Methoden, wie z.B. mittels Ultraschall von aussen untersucht, was sehr zeitaufwendig, teuer und zudem bei komplizierten oder sehr kleinen Schäden auch nicht immer ausreichend zuverlässig ist.

Diese Problematik ist seit langem bekannt und daher wurden auch schon einwandige Stützkörper diskutiert, die im Prinzip einfach gegengeschweisst werden könnten, da sie keine entlang der Längsrichtung geschlossene Röhre bilden. Solche Konzepte mussten jedoch zumindest für die modernen Grossdieselmotoren, die enormen mechanischen Belastungen im Betriebszustand ausgesetzt sind, mit Ausnahme der Erfindung gemäss EP 08 155 174 sämtlich verworfen werden, weil bereits einfache Überlegungen bzw. Berechnungen zeigen, dass derartige einwandige Stützkörper den Belastungen in einem modernen Grossdieselmotor nicht einmal annähernd standhalten können.

Ausgehend vom Stand der Technik ist es daher die Aufgabe der Erfindung, einen verbesserten Kreuzkopf-Grossdieselmotor vorzuschlagen, bei welchem die Nachteile mit den bekannten doppelwandigen Stützelementen im Ständer vermieden werden und der insbesondere im Bereich des Ständers einfacher konstruiert ist, wobei gleichzeitig die Abstützung des Kreuzkopfs unter den enormen Belastungen im Betriebszustand sicher gewährleistet ist und die auftretenden statischen und dynamischen Kräfte der Gleitschuhe zuverlässig abgeleitet werden können.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit einen Kreuzkopf-Grossdieselmotor mit einer Grundplatte zur Aufnahme einer sich entlang einer Motorachse erstreckenden Kurbelwelle, einem zwei Aussenwände umfassenden Ständer, welcher auf der Grundplatte angeordnet ist, sowie eine auf dem Ständer angeordnete Zylindersektion zur Aufnahme eines Zylinders. Die Grundplatte, der Ständer und die Zylindersektion sind durch einen Zuganker miteinander verbunden, der sich im Ständer entlang einer Gleitfläche zur Abstützung eines Gleitschuhes eines Kreuzkopfes erstreckt. Erfindungsgemäss ist der Zuganker im Bereich des Ständers als Stützanker ausgebildet, an dem der Gleitschuh über die Gleitfläche abgestützt ist.

Die Erfindung sieht somit eine Abstützung des Kreuzkopfes vor, welche im wesentlichen unabhängig vom Ständer die Kräfte der Gleitschuhe direkt an die Zuganker abgibt. Der Zuganker kann dabei bevorzugt aus mehreren ineinander geschraubten Teilen bestehen.

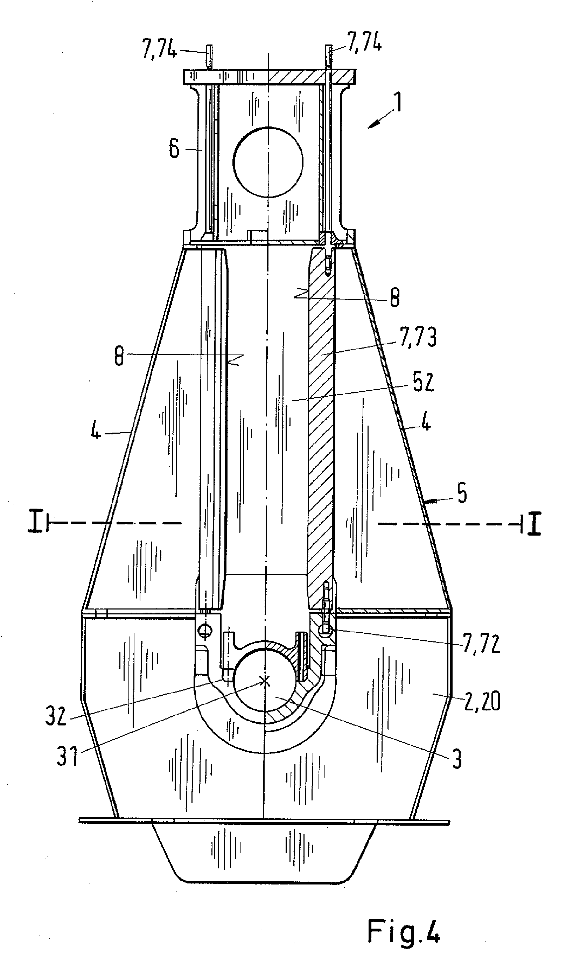

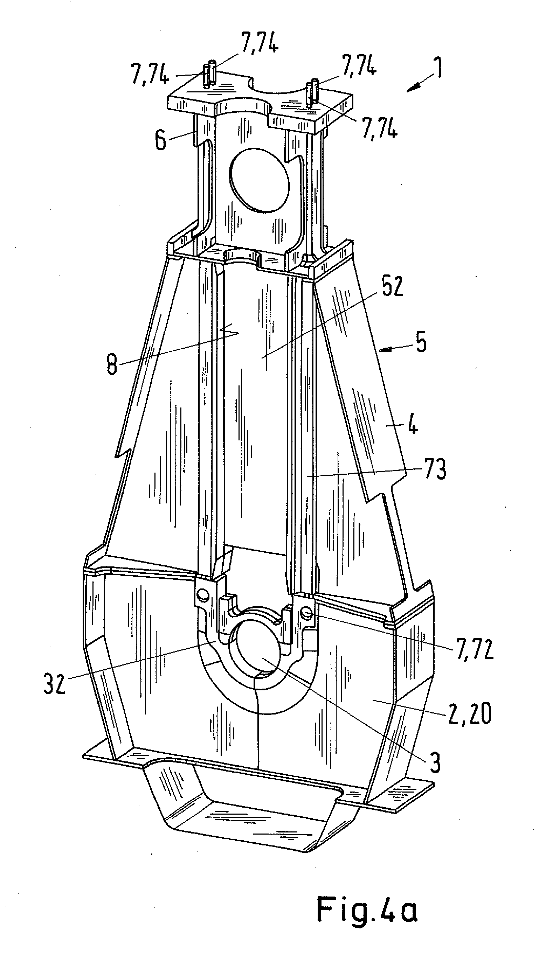

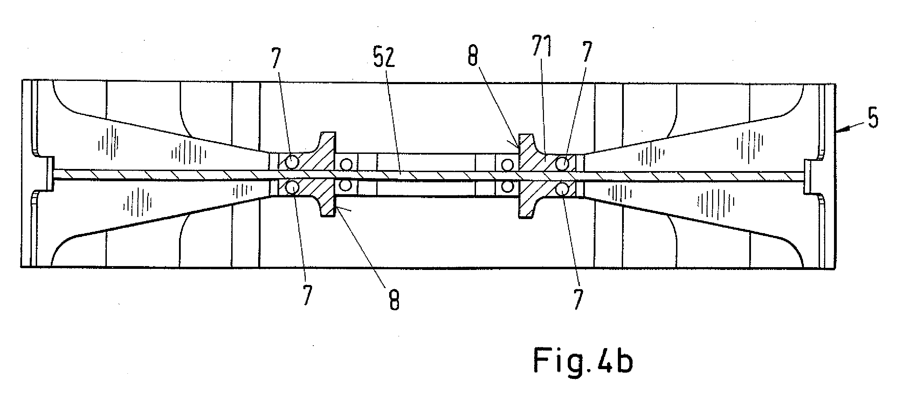

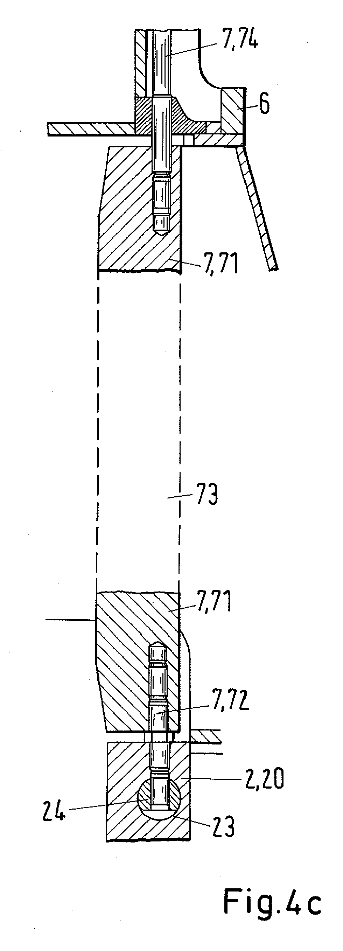

Zum Beispiel bei einer einwandig gestalteten Struktur werden vorteilhaft vier Zuganker pro Sektion verwendet, wie später noch insbesondere anhand der Fig. 4 und Fig. 4b im Detail erläutert werden wird. Diese werden dann als Linearführung des Kreuzkopfes über die Gleitschuhe verwendet. Der Gleitschuh benutzt dabei je einen Zuganker als Längsführung. Da die aus dem Stand der Technik bekannten Zuganker wenig Biegesteifigkeit haben, können die Zuganker der vorliegenden Erfindung vorteilhaft aus mehreren ineinandergeschraubten Teilen bestehen. Dabei ist der mittlere Teil, der die Gleitfläche umfasst, speziell für die Aufnahme der Gleitschubkräfte gestaltet.

Bei einem dreiteiligen erfindungsgemässen Zuganker ist oben und unten je ein kurzes Zugankerteil eingeschraubt. Die Verspannung der Strukturteile des Grossdieselmotors geschieht dann wie an sich bekannt durch Anziehen der Zuganker mit Pressen. Das speziell gestaltete Mittelstück des Zugankers wird folglich automatisch mitverspannt.

Wie bereist erwähnt, umfasst der Zuganker im Bereich des Ständers vorteilhaft die Gleitfläche zur Abstützung des Gleitschuhs.

Dabei ist der Zuganker im Bereich des Ständers zur Aufnahme der Gleitschuhkräfte entsprechend ausreichend verstärkt.

In einem für die Praxis besonders wichtigen Ausführungsbeispiel ist der Zuganker mehrteilig, insbesondere dreiteilig ausgestaltet. Es versteht sich, dass ein Zuganker der vorliegenden Erfindung auch einteilig ausgestaltet sein kann, wobei der Zuganker dann natürlich auch in einem mittleren Bereich entsprechend verstärkt ist.

Zur Aufnahme transversaler Kräfte kann ein erfindungsgemässer Zuganker ein transversales Stützsegment umfassen, das ich im Einbauzustand im Bereich des Ständers erstreckt, wobei der Zuganker in einem anderen Ausführungsbeispiel zur Aufnahme der transversalen Kräfte einen dreieckförmigen Querschnitt haben, der sich im Einbauzustand im Bereich des Ständers erstreckt in transversaler Richtung erstreckt.

Bei einem speziellen Ausführungsbeispiel eines erfindungsgemässen Kreuzkopf-Grossdieselmotors ist ein Stützelement der Grundplatte einwandig ausgestaltet. Es versteht sich, dass für ganz spezielle Anwendungen die Grundplatte auch mit mehrwandigen Stützelementen versehen sein kann.

Vorteilhaft sind mehrere Zuganker, besonders bevorzugt sind vier Zuganker pro Gleitschuhpaar vorgesehen.

In der Praxis sind kann dabei zwischen zwei gegenüberliegenden Zugankern eine Mittelwand zur Verstärkung vorgesehen sein.

Um möglichst die enormen Zugkräfte, die beim Verspannen der Zuganker entstehen, vom Lager der Kurbelwelle fern zu halten, umfasst die Grundplatte in an sich bekannter Weise mindestens einen Lagersattel zur Lagerung der Kurbelwelle, wobei der Zuganker im oder am Lagersattel in einem Bereich zwischen der Achse der Kurbelwelle und dem Ständer fixiert ist.

Im Speziellen kann der Zuganker im Lagersattel in einer Gewindebohrung fixiert sein, wobei sich der Zuganker aber auch durch eine Bohrung im Lagersattel erstrecken und durch eine Verschraubung unterhalb des Lagersattels fixiert sein kann.

Sehr vorteilhaft kann der Zuganker im Lagersattel in einem Bereich zwischen der Längsachse der Kurbelwelle und dem Ständer in einer Aussparung mittels eines aus der Aussparung entfernbaren Halteelements fixiert sein, was an sich ebenfalls aus dem Stand der Technik für herkömmliche Grossdieselmotoren bekannt ist.

Die Erfindung wird im Folgenden an Hand der Zeichnung näher erläutert. Es zeigen in schematischer Darstellung:
- Fig. 1: Schnitt durch einen bekannten Kreuzkopf-Grossdieselmotor mit Grundplatte, Ständer und Zylindersektion;
- Fig. 2: einen Schnitt I - I gemäss Fig. 1 mit doppelwandigem Stützkörper und einwandig ausgestaltetem Stützelement;
- Fig. 3: einen Schnitt II - II gemäss Fig. 1 mit je zwei doppelwandigen Stützkörpern zwischen zwei benachbarten Kreuzköpfen.
- Fig. 4: ein Ausführungsbeispiel eines erfindungsgemässen Grossdieselmotors im Schnitt;
- Fig. 4a: eine perspektivische Ansicht gemäss Fig. 4;
- Fig. 4b: einen Schnitt entlang der Schnittlinie I - I gemäss Fig. 4;
- Fig. 4c: die Verankerung des dreiteiligen Zugankers gemäss Fig. 4 im Detail.

Der erfindungsgemässe Kreuzkopf-Grossdieselmotor, der im Folgenden gesamthaft mit dem Bezugszeichen 1 bezeichnet wird, ist insbesondere als Zweitakt-Grossdieselmotor 1 mit Längsspülung ausgelegt, wie er beispielsweise im Schiffsbau verbreitet Verwendung findet.

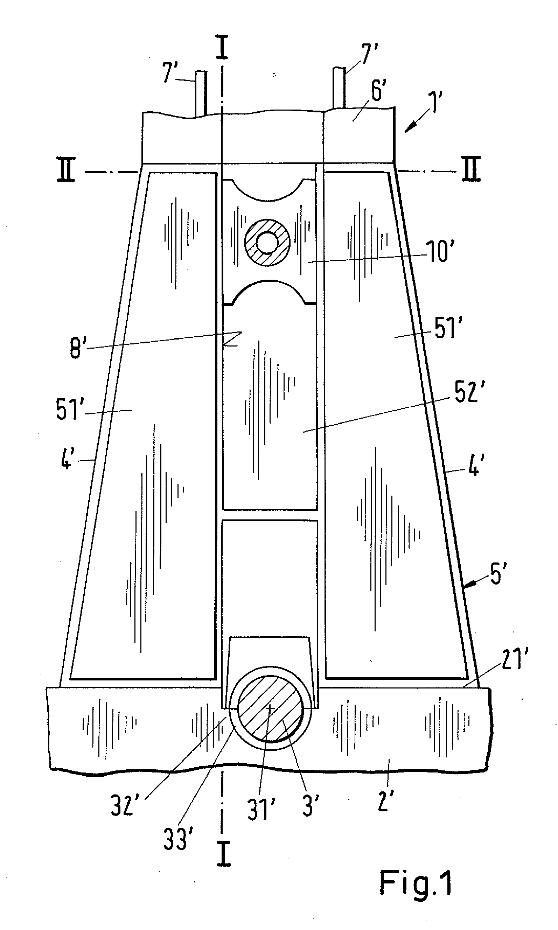

Fig. 1 zeigt zunächst schematisch im Schnitt einen aus dem Stand der Technik bekannten Aufbau eines Kreuzkopf-Grossdieselmotors 1' mit Grundplatte 2', Ständer 5' und Zylindersektion 6', der zum besseren Verständnis der vorliegenden Erfindung im Folgenden kurz beschrieben werden soll.

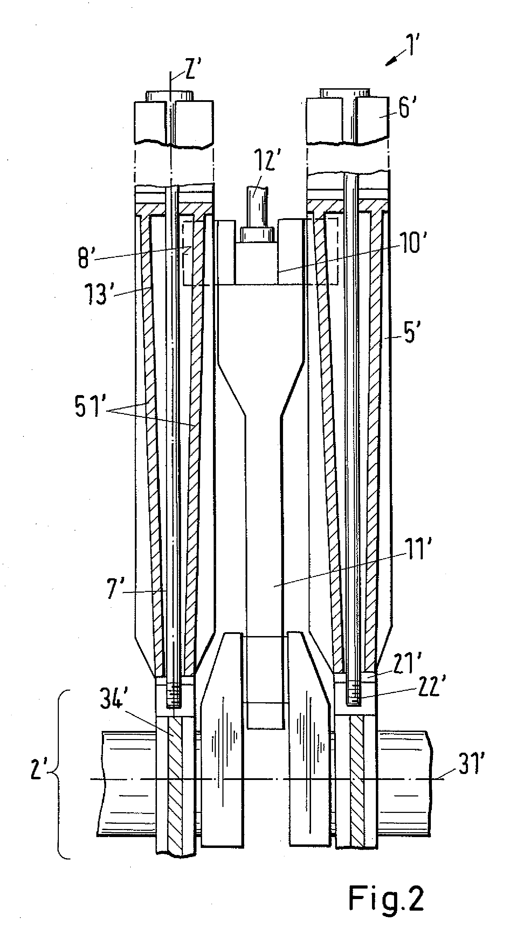

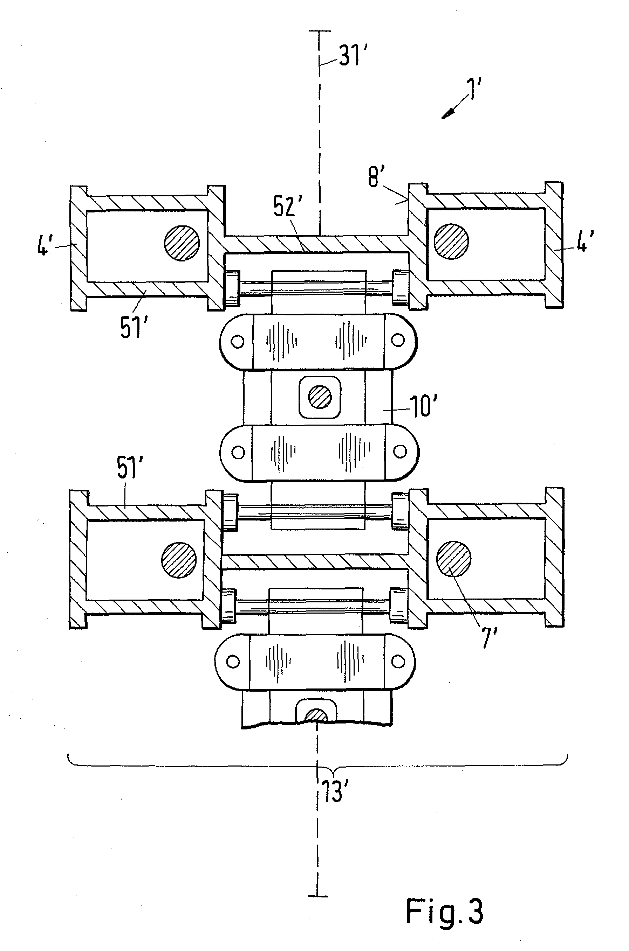

Fig. 2 zeigt einen Schnitt I - I durch den bekannten Motor gemäss Fig. 1 mit doppelwandigem Stützkörper und einwandig ausgestaltetem Stützelement, während in Fig. 3 ein Schnitt II - II gemäss Fig. 1 dargestellt ist.

Zur Unterscheidung des Standes der Technik von der vorliegenden Erfindung, sind dabei in den Fig. 1, Fig. 2 und Fig. 3, die sich alle auf den Stand der Technik beziehen, die Bezugzeichen mit einem Hochkomma versehen, während in den übrigen Figuren, die sich auf die Erfindung beziehen, die Bezugszeichen kein Hochkomma tragen.

Die Zylindersektion 6' dient zur Aufnahme von nicht dargestellten Zylindern. Der Ständer 5', der beispielsweise durch Zusammenschweissen von Stahlblechen entstanden ist, weist ein Bodenblech 21' sowie zwei Aussenwände 4' auf und bildet gemeinsam mit den darstellungsgemäss senkrecht verlaufenden Gleitflächen 8' zwei im Querschnitt trapezförmige Rahmen, die durch ein gemeinsames Deckblech miteinander verbunden sind. Die zwei gegenüberliegenden senkrecht verlaufenden Gleitflächen 8' werden durch eine Mittelwand 52', die zwischen den beiden trapezförmigen Rahmen angeordnet ist, abgestützt. Der Ständer 5' ist mit dem Bodenblech 21' auf der Grundplatte 2' angeordnet, die einen Lagersattel 32' mit Lagerschale 33' zur Lagerung einer Kurbelwelle 3' umfasst. Die Kurbelwelle 3' mit Kurbelwellenachse 31', die mit der Motorachse 31' zusammenfällt, ist in an sich bekannter Weise mit einem Kreuzkopf 10' über eine in Fig. 1 nicht gezeigte Schubstange 11' verbunden.

Die Fig. 2 und 3 zeigen jeweils einen Schnitt gemäss Fig. 1 entlang der Schnittlinie I - I bzw. entlang der Schnittlinie II-II durch den aus dem Stand der Technik bekannten Grossdieselmotor der Fig. 1.

Der in Fig. 2 dargestellte Schnitt gemäss Fig. 1 entlang der Schnittlinie I - I durch einen aus dem Stand der Technik bekannten Kreuzkopf-Grossdieselmotor 1', zeigt einen Ständer 5', der auf der Grundplatte 2' angeordnet ist, sowie die Zylindersektion 6', die auf dem Ständer 5' platziert ist. Zwischen dem Ständer 5' und der Zylindersektion 6' ist ein Deckblech und zwischen dem Ständer 5' und der Grundplatte 2' ein Bodenblech 21' angeordnet. Die Zylindersektion 6' ist in bekannter Weise zur Aufnahme eines oder mehrerer nicht gezeigter Zylinder geeignet. Der Innenraum des Zylinders bildet in bekannter Weise zusammen mit einem nicht gezeigten Zylinderdeckel und einem ebenfalls nicht gezeigten Kolben, der mittels einer Kolbenstange 12' mit dem Kreuzkopf 10' verbunden und im Zylinder hin- und herbewegbar angeordnet ist, einen Brennraum des Kreuzkopf-Grossdieselmotors 1'. Der Ständer 5' umfasst einen Stützkörper 13', der durch transversale Stützwände 51' doppelwandig ausgestaltet ist. Die Stützwände 51' tragen eine Gleitfläche 8' zur Führung des Kreuzkopfes 10', der mittels einer Schubstange 11' mit der Kurbelwelle 3' und mit der Kolbenstange 12' mit einem nicht dargestellten Kolben des Kreuzkopf-Grossdieselmotors 1' verbunden ist.

Die Grundplatte 2' umfasst zur Aufnahme und Lagerung der Kurbelwelle 3' einen Lagersattel 32' sowie ein transversales Stützelement 34', das im vorliegenden Beispiel einwandig ausgestaltet ist, aber natürlich auch, wie an sich bekannt, zweiwandig ausgestaltet sein kann. Zylindersektion 6', Ständer 5' und Grundplatte 2' sind durch einen Zuganker 7' unter Vorspannung miteinander verbunden. Dabei erstreckt sich der Zuganker 7' im Bereich des Ständers 5' zwischen den transversalen Stützwänden 51' innerhalb des doppelwandigen Stützkörpers 13' und ist im Lagersattel 32' der Grundplatte 2' in einem Bereich zwischen der Achse 31' der Kurbelwelle 3' und dem Ständer 5', also darstellungsgemäss oberhalb der Achse 31' der Kurbelwelle 3' in einer Gewindebohrung 22' fixiert.

Bei dem in Fig. 2 dargestellten Beispiel erstrecken sich die transversalen Stützwände 51' des Stützkörpers 13' V-förmig in Richtung der Zylindersektion 6', das heisst der gegenseitige Abstand der Stützwände 51' eines Stützkörpers 13' vergrössert sich zunehmend in Richtung zur Zylindersektion 6'. Die Normalkräfte, die der Kreuzkopf 10' über die Gleitflächen 8' auf die Stützwände 51' und damit auf den Stützkörper 13' überträgt, sind bekanntlich nahe am oberen Totpunkt der Hin- und Herbewegung des Kolbens am grössten. Durch die V-förmige Gestaltung des Stützkörpers 13' ist dieser im darstellungsgemäss oberen Bereich des Ständers 5' relativ breit und kann daher die Normalkräfte des Kreuzkopfes 10' besonders gut aufnehmen bzw. in den Ständer 5' ableiten.

Der Zuganker 7' mit seiner Längsachse Z' ist mittig zwischen den transversalen Stützwänden 51' des Stützkörpers 13' angeordnet, wobei das einwandig ausgestaltete Stützelement 34' der Grundplatte 2', auf dem sich der Stützkörper 13' in der Grundplatte 2' abstützt, fluchtend zur Längsachse Z' des Zugankers 7' angeordnet ist. Der Zuganker 7' ist, insbesondere um Deformationen der Lagerschalen zu vermeiden, in einem Bereich zwischen der Achse 31' der Kurbelwelle 3' und dem Ständer 5', darstellungsgemäss also oberhalb der Achse 31'der Kurbelwelle 3', im Lagersattel in einer Gewindebohrung fixiert. Dadurch, dass das einwandige Stützelement 34' in der Grundplatte 2' fluchtend zur Längsachse Z' des Zugankers 7' und damit symmetrisch in Bezug auf die Stützwände 51' des Stützkörpers 13' angeordnet ist, ergibt sich eine besonders hohe Stabilität, ohne dass die Grundplatte 2' eine zu hohe Steifigkeit aufweist.

Fig. 3 zeigt für den aus dem Stand der Technik bekannten Motor der Fig. 2 einen weiteren Schnitt gemäss Fig. 1 entlang der Linie II - II. Dargestellt sind je zwei im Ständer 5' gegenüber angeordnete Stützkörper 13', die durch die Mittelwand 52' zwischen den Gleitflächen 8' gegeneinander abgestützt sind. Der Kreuzkopf 10' wird zwischen je zwei gegenüberliegenden Gleitflächen 8' von jeweils zwei benachbarten Stützkörpern 13' geführt. In jedem Stützkörper 13' erstreckt sich zwischen den Stützwänden 51' ein Zuganker 7'.

Die Grundplatte des Kreuzkopf-Grossdieselmotors der Fig. 2 und Fig. 3 weisen dabei ein einwandig ausgestaltetes transversales Stützelement in der Bodenplatte auf, das beim Zusammenbau des Motors problemlos gegengeschweisst werden kann, so dass die Probleme mit der einseitigen Schweissnaht, wie sie früher bei der aus dem Stand der Technik bekannten Grundplatten mit doppelwandigen Stützelementen üblich waren, vermieden werden. Die Zuganker sind bevorzugt als kurze Zuganker ausgeführt und in einem oberen Bereich des Sattels, das heisst zwischen der Achse der Kurbelwelle und dem Bodenblech des Ständers in einer Gewindebohrung fixiert. Dadurch werden Verspannungen im Lagersattel sowie Deformationen der Lagerschale durch den unter erheblicher Vorspannung im Lagersattel fixierten Zuganker weitestgehend vermieden. Die Steifigkeit der Grundplatte des Kreuzkopf-Grossdieselmotors der Fig. 2 und Fig. 3 wird insbesondere durch die kurzen Zuganker und die einwandig ausgestalteten Stützelemente optimiert. Da die Zuganker unter erheblicher Vorspannung in der Grundplatte verankert werden müssen, wurde üblicherweise eine Kombination von doppelwandigem Stützkörper im Ständer mit einwandigem Stützelement in der Grundplatte nicht in Betracht gezogen, da sowohl im unteren Bereich des Ständers und in den Bodenblechen, als auch im Bereich des Lagersattels mit nicht zu vermeidenden Biegebelastungen und daraus resultierenden nicht vertretbaren mechanischen Spannungen im Material gerechnet. Durch diese Art der Gestaltung der Grundplatte im Bereich des Zugankers, wie sie erstmals in der EP 1 382 829 angeregt wurde, konnten sowohl die früher befürchteten Probleme durch Biegebelastungen, als auch das bei einer solchen Konstruktion erwartete Fretting im Bereich der Grundplatte zufriedenstellend vermieden werden. Insbesondere wurde die Bodenplatte konstruktiv deutlich vereinfacht.

Allerdings hat, wie bereits erwähnt, die in den Fig. 2 und Fig. 3 dargestellte bekannte Lösung den entscheidenden Nachteil, dass der doppelwandig ausgestaltete Stützkörper bzw. Ständer sehr aufwändig in der Konstruktion und problematisch in der Herstellung ist, insbesondere was das Verschweissen der Teile des doppelwandigen Stützkörpers angeht.

Dieser Mangel wird erstmals durch die vorliegende Erfindung vollständig behoben.

In den Fig. 4 und Fig. 4a ist schematisch ein erstes Ausführungsbeispiel eines erfindungsgemässen Grossdieselmotors 1 dargestellt. Fig. 4a zeigt zum besseren Verständnis lediglich eine perspektivische Ansicht der Fig. 4 und ist ansonsten zu dieser identisch.

Der erfindungsgemässe Kreuzkopf-Grossdieselmotor der Fig. 4 bzw. Fig. 4a umfasst in an sich bekannter Weise eine Grundplatte 2 zur Aufnahme einer sich entlang einer Motorachse 31 erstreckenden Kurbelwelle 3, einem zwei Aussenwände 4 umfassenden Ständer 5, welcher auf der Grundplatte 2 angeordnet ist. Auf dem Ständer 5 ist der untere Teil einer Zylindersektion 6 zur Aufnahme eines Zylinders zu sehen, wobei die Grundplatte 2, der Ständer 5 und die Zylindersektion 6 durch einen Zuganker 7 miteinander verbunden sind. Der Zuganker 7 erstreckt sich im Ständer 5 entlang einer Gleitfläche 8 zur Abstützung eines in Fig. 4 aus Gründen der Übersicht nicht gezeigten Gleitschuhes 9 eines Kreuzkopfes 10. Erfindungsgemäss ist der Zuganker 7 im Bereich des Ständers 5 als Stützanker 7 ausgebildet, an dem Gleitschuh 9 über die Gleitfläche 8 abgestützt ist.

Wie deutlich zu sehen ist, ist der Zuganker 7 im Bereich des Ständers 5 zur Aufnahme der Gleitschuhkräfte verstärkt und der Zuganker 7 ist mehrteilig, im vorliegenden Beispiel dreiteilig ausgestaltet.

Wie der Fig. 4b deutlich zu entnehmen ist, umfasst der Zuganker 7 im Bereich des Ständers 5 ein transversales Stützsegment 71 zur Aufnahme transversaler Querkräfte.

Bei dem hier dargestellten besonders bevorzugten Ausführungsbeispiel sind vier Zuganker 7 pro Gleitschuhpaar vorgesehen und zwischen zwei gegenüberliegenden Zugankern 7 ist eine Mittelwand 52 zur Verstärkung und Aufnahme der Querkräfte im Betriebszustand vorgesehen.

Wie der Fig. 4 bzw. der Fig. 4a zu entnehmen ist, weist die Grundplatte 2 einen Lagersattel 32 zur Lagerung der Kurbelwelle 3 auf, wobei der Zuganker 7 zur Entlastung des Kurbelwellenlagers von den Zugkräften des Zugankers 7 im Lagersattel 32 in einem Bereich zwischen der Achse 31 der Kurbelwelle 3 und dem Ständer 5 fixiert ist.

In Fig. 4c ist schliesslich die Fixierung des dreiteiligen Zugankers 7 im Lagersattel 32 bzw. im oberen Teil des Ständers 5 im transversalen Stützelement 71 etwas genauer im Detail dargestellt.

Der Zuganker 7 ist dabei im Lagersattel 32 im Bereich zwischen der Längsachse 31 der Kurbelwelle 3 und dem Ständer 5 in einer Aussparung 23 mittels eines aus der Aussparung 23 entfernbaren Halteelements 24 fixiert.

Dadurch kann dass darstellungsgemäss untere Verschraubungsteil 72 des Zugankers 7 einfach am Lagersattel 32 montiert und mit dem Mittelteil 73 des Zugankers 7 verschraubt werden.

Darstellungsgemäss oben ist das Mittelteil 73 des Zugankers 7 mit dem oberen Verschraubungsteil 74 des dreiteiligen Zugankers 7 verschraubt, wobei das obere Verschraubungsteil 74 dann in an sich bekannter Weise mit dem nicht dargestellten Zylinderdeckel des Zylinder des Grossdieselmotors 1 verschraubt ist.

Es versteht, dass die Erfindung nicht auf die geschilderten Ausführungsbeispiele beschränkt ist und insbesondere alle geeigneten Kombinationen der beschriebenen speziellen Beispiele durch die Erfindung erfasst sind.

## Patentansprüche

1. Kreuzkopf-Grossdieselmotor mit einer Grundplatte (2) zur Aufnahme einer sich entlang einer Motorachse (31) erstreckenden Kurbelwelle (3), einem zwei Aussenwände (4) umfassenden Ständer (5), welcher auf der Grundplatte (2) angeordnet ist, sowie eine auf dem Ständer (5) angeordnete Zylindersektion (6) zur Aufnahme eines Zylinders, wobei die Grundplatte (2), der Ständer (5) und die Zylindersektion (6) durch einen Zuganker (7) miteinander verbunden sind, der sich im Ständer (5) entlang einer Gleitfläche (8) zur Abstützung eines Gleitschuhes (9) eines Kreuzkopfes (10) erstreckt, **dadurch gekennzeichnet, dass** der Zuganker (7) im Bereich des Ständers (5) als Stützanker (7) ausgebildet ist, an dem der Gleitschuh (9) über die Gleitfläche (8) abgestützt ist.

2. Kreuzkopf-Grossdieselmotor nach Anspruch 1, wobei der Zuganker (7) im Bereich des Ständers (5) die Gleitfläche (8) zur Abstützung des Gleitschuhs (9) umfasst.

3. Kreuzkopf-Grossdieselmotor nach einem der Ansprüche 1 oder 2, wobei der Zuganker (7) im Bereich des Ständers (5) zur Aufnahme der Gleitschuhkräfte verstärkt ist.

4. Kreuzkopf-Grossdieselmotor nach einem der vorangehenden Ansprüche, wobei der Zuganker (7) mehrteilig, insbesondere dreiteilig ausgestaltet ist.

5. Kreuzkopf-Grossdieselmotor nach einem der vorangehenden Ansprüche, wobei der Zuganker (7) im Bereich des Ständers (5) ein transversales Stützsegment (71) zur Aufnahme transversaler Kräfte umfasst.

6. Kreuzkopf-Grossdieselmotor nach einem der vorangehenden Ansprüche, wobei der Zuganker (7) im Bereich des Ständers (5) zur Aufnahme der transversalen Kräfte einen dreieckförmigen Querschnitt hat.

7. Kreuzkopf-Grossdieselmotor nach einem der vorangehenden Ansprüche, wobei ein Stützelement (20) der Grundplatte (2) einwandig ausgestaltet ist.

8. Kreuzkopf-Grossdieselmotor nach einem der vorangehenden Ansprüche, wobei mehrere Zuganker (7), insbesondere vier Zuganker (7) pro Gleitschuhpaar vorgesehen sind.

9. Kreuzkopf-Grossdieselmotor nach einem der vorangehenden Ansprüche, wobei zwischen zwei gegenüberliegenden Zugankern (7) eine Mittelwand (52) zur Verstärkung vorgesehen ist.

10. Kreuzkopf-Grossdieselmotor nach einem der vorangehenden Ansprüche, wobei die Grundplatte (2) mindestens einen Lagersattel (32) zur Lagerung der Kurbelwelle (3) aufweist und wobei der Zuganker (7) im oder am Lagersattel (32) in einem Bereich zwischen der Achse (31) der Kurbelwelle (3) und dem Ständer (5) fixiert ist.

11. Kreuzkopf-Grossdieselmotor nach einem der vorangehenden Ansprüche, wobei der Zuganker (7) im Lagersattel (32) in einer Gewindebohrung fixiert ist.

12. Kreuzkopf-Grossdieselmotor nach einem der vorangehenden Ansprüche, wobei sich der Zuganker (7) durch eine Bohrung im Lagersattel (32) erstreckt und durch eine Verschraubung fixiert ist.

13. Kreuzkopf-Grossdieselmotor nach einem der vorangehenden Ansprüche, wobei der Zuganker (7) im Lagersattel (32) in einem Bereich zwischen der Längsachse (31) der Kurbelwelle (3) und dem Ständer (5) in einer Aussparung (23) mittels eines aus der Aussparung (23) entfernbaren Halteelements (24) fixiert ist.
